# EUROPEAN PATENT APPLICATION

(11) **EP 2 892 276 A1**
(43) Date of publication of application: **08.07.2015**
(21) Application number: 12885712.5
(22) Date of filing: 29.09.2012
(51) Int. Cl.: H04W 28/08

(54) **DATA DISTRIBUTION METHOD AND DEVICE**

(71) Applicant: Huawei Technologies Co., Ltd., Longgang District Shenzhen, Guangdong 518129 (CN)
(72) Inventor: TANG, Linfeng, Shenzhen Guangdong 518129 (CN); GUI, Dan, Shenzhen Guangdong 518129 (CN); FU, Miao, Shenzhen Guangdong 518129 (CN); ZOU, Pinyang, Shenzhen Guangdong 518129 (CN)
(74) Representative: Maiwald Patentanwalts GmbH
(86) International application number: PCT/CN2012/082488
(87) International publication number: WO 2014/047939

(57) **Abstract**

A data splitting method is provided and includes: sending, by a first device, a data connection request to a second device, so that the second device executes data splitting; and receiving, by the first device through at least two radio links in multiple radio links, split data that is sent by the second device according to the data connection request, where the first device establishes, via a third device, one link of the two radio links with the second device, and the at least two radio links in the multiple radio links include two radio links that are established by using different radio protocols. According to the foregoing technical solutions, downlink data may be sent to a user equipment through different radio links in a splitting manner, thereby increasing downlink bandwidth allocated to a user, and improving user experience with data services.

## Description

### TECHNICAL FIELD

The present invention relates to the field of wireless communications, and in particular, to a data splitting method and device.

### BACKGROUND

With the development of wireless communications technologies and Internet technologies, with the increasing popularity of intelligent terminals, and with continuous emergence of new media, an increasing number of users choose to use data services, and users impose higher requirements on service access bandwidths.

When the wireless communications technologies are used, user experience with data services is closely related to an amount of service access bandwidths. When there is a large amount of service access bandwidths, data service users have faster response and better user experience than when there is a small amount of service access bandwidths. Therefore, what is needed is a solution to address the problem of how to increase downlink bandwidth allocated to users and then improve user experience with data services.

### SUMMARY

In view of this, embodiments of the present invention provide a data splitting method and device, so as to solve a problem of how to increase downlink bandwidth allocated to a user.

According to a first aspect, a data splitting method is provided and includes: sending, by a first device, a data connection request to a second device, so that the second device executes data splitting; and receiving, by the first device through at least two radio links in multiple radio links, split data that is sent by the second device according to the data connection request, where the first device establishes, via a third device, one link of the two radio links with the second device, and the at least two radio links in the multiple radio links include two radio links that are established by using different radio protocols.

In a first possible implementation, the at least two radio links in the multiple radio links include: a wireless local area network (WLAN) link and a 3rd Generation Partnership Project (3GPP) link.

With reference to the first aspect or the first possible implementation of the first aspect, in a second possible implementation, establishing, by the first device, a WLAN link with the third device, and acquiring, from the third device, an allocated IP address of the WLAN link and a service set identifier (SSID) of a WLAN of the third device; and establishing, by the first device, a first 3GPP link with the second device, where the second device establishes a second 3GPP link with the third device.

With reference to the second possible implementation of the first aspect, in a third possible implementation, the sending, by a first device, a data connection request to a second device includes: sending, by the first device, a data link request to the second device through the first 3GPP link.

With reference to the third possible implementation of the first aspect, in a fourth possible implementation, sending, by the first device, to the second device the IP address of the WLAN link of the first device and the service set identifier (SSID) of the WLAN of the third device.

With reference to the fourth possible implementation of the first aspect, in a fifth possible implementation, performing tunnel decapsulation, by the first device, for received split data that is forwarded by the third device through the second 3GPP link and the WLAN link, and performing sequencing and assembling for the received split data after being performed tunnel decapsulation and split data that is to pass through the first 3GPP link, to obtain final data.

With reference to the second possible implementation manner of the first aspect, in a sixth possible implementation manner, the sending, by a first device, a data connection request to a second device includes: sending, by the first device, a data link request to the second device via the third device through the WLAN link that is established with the third device.

With reference to the sixth possible implementation of the first aspect, in a seventh possible implementation, sending, by the first device, to the second device the IP address of the WLAN link of the first device and the service set identifier (SSID) of the WLAN of the third device.

With reference to the seventh possible implementation of the first aspect, in an eighth possible implementation, performing sequencing and assembling, by the first device, on received split data that is forwarded by the third device through the second 3GPP link and the WLAN link and split data that is to pass through the first 3GPP link, to obtain final data.

With reference to the first aspect or any one of the foregoing implementations of the first aspect, in a ninth possible implementation, sending, by the first device, signaling to the second device, where the signaling is used to indicate that the first device supports a data concurrence function.

According to a second aspect, a data splitting method is provided and includes: receiving, by a second device, a data connection request sent by a first device; and sending, by the second device according to the data connection request, split data to the first device through at least two radio links in multiple radio links that are established with the first device, where the at least two radio links in the multiple radio links include two radio links that are established by using different radio protocols, and one radio link of the at least two radio links in the multiple radio links is established by the first device with the second device via a third device.

In a first possible implementation, the at least two radio links in the multiple radio links include: a wireless local area network (WLAN) link and a 3rd Generation Partnership Project (3GPP) link.

With reference to the second aspect or the first possible implementation of the second aspect, in a second possible implementation, establishing, by the second device, a first 3GPP link with the first device, and establishing, by the second device, a second 3GPP link with the third device, where the first device establishes a WLAN link with the third device, and acquires, from the third device, an allocated IP address of the WLAN link of the first device and a service set identifier (SSID) of a WLAN of the third device.

With reference to the second possible implementation of the second aspect, in a third possible implementation, receiving, by the second device, the IP address of the WLAN link of the first device and the SSID of the WLAN of the third device that are sent by the first device through the first 3GPP link, and receiving, by the second device, the SSID of the WLAN of the third device that is sent by the third device through the second 3GPP link; and determining, by the second device according to a correspondence between SSIDs of the WLAN of the third device that are sent by the first device and the third device, radio links to be used for data splitting.

With reference to the third possible implementation of the second aspect, in a fourth possible implementation, performing sequence adding and tunnel encapsulation, by the second device, for split data that is to be forwarded by the third device through the second 3GPP link and the WLAN link, and delivering the split data by using the IP address of the WLAN link as a destination IP address; and performing sequence adding, by the second device, for split data that is to pass through the first 3GPP link, and delivering the split data.

With reference to the third possible implementation of the second aspect, in a fifth possible implementation, receiving, by the second device, the IP address of the WLAN link of the first device and the SSID of the WLAN of the third device that are sent by the first device through the first 3GPP link, and a WLAN port number that is used to establish a service through the WLAN link, and receiving, by the second device, the SSID of the WLAN of the third device that is sent by the third device through the second 3GPP link; and determining, by the second device according to a correspondence between the SSIDs of the WLAN of the third device that are sent by the first device and the third device, radio links to be used for data splitting.

With reference to the fifth possible implementation of the second aspect, in a sixth possible implementation, performing sequence adding, by the second device, for split data that is to pass through the first 3GPP link, changing a destination IP address to the IP address of the WLAN link, and sending the split data to the first device by using the WLAN port number that is used to establish a service through the WLAN link as a port; and sending, via the third device through the WLAN link, to the first device split data that is to pass through the second 3GPP link.

According to a third aspect, a data splitting method is provided and includes: receiving, by a third device through a radio link that is established between the third device and a second device, split data that is sent by the second device according to a data connection request sent by a first device; and sending, by the third device, the split data to the first device through a radio link that is established between the third device and the first device, where the radio link that is established between the third device and the second device, and the radio link that is established between the third device and the first device, are two radio links that are established by using different protocols.

In a first possible implementation, the two radio links are respectively: a wireless local area network WLAN link that is established between the third device and the first device, and a second 3rd Generation Partnership Project 3GPP link that is established between the third device and the second device.

With reference to the third aspect or the first possible implementation of the third aspect, in a second possible implementation, after establishing the WLAN link with the first device, allocating, by the third device, an IP address of the WLAN link of the first device to the first device, and sending an SSID of a WLAN of the third device to the first device.

With reference to the second possible implementation of the third aspect, in a third possible implementation, sending, by the third device, the SSID of the WLAN of the third device to the second device through the second 3 GPP link; or sending, by the third device, the SSID of the WLAN of the third device to the second device through the second 3GPP link, and establishing an association relationship between the IP address of the WLAN link of the first device and the second 3GPP link.

With reference to the third possible implementation of the third aspect, in a fourth possible implementation, forwarding, by the third device according to the association relationship and through the second 3GPP link, the data connection request that is sent by the first device to the second user equipment through the WLAN link.

With reference to the fourth possible implementation of the third aspect, in a fifth possible implementation, receiving, by the third device, the split data that is sent by the second device based on the data connection request sent by the first device, and forwarding the split data to the first device through the WLAN link; or receiving, by the third device, the split data that is sent by the second device based on the data connection request sent by the first device, and sending the split data to the first device through the WLAN link according to the association relationship.

According to a fourth aspect, a data splitting device is provided and includes a sending unit and a receiving unit: the sending unit is configured to send a data connection request to a second device, so that the second device executes data splitting; and the receiving unit is configured to receive, through at least two radio links in multiple radio links, split data that is sent by the second device according to the data connection request, where the device establishes, via a third device, one link of the two radio links with the second device, and the at least two radio links in the multiple radio links include two radio links that are established by using different radio protocols.

In a first possible implementation, the device further includes a first link establishing unit and a second link establishing unit: the first link establishing unit is configured to establish a wireless local area network WLAN link with the third device, and the second link establishing unit is configured to establish a first 3rd Generation Partnership Project 3GPP link with the second device, where the second device establishes a second 3GPP link with the third device.

According to a fifth aspect, a data splitting device is provided and includes a receiving unit and a sending unit: the receiving unit is configured to receive a data connection request sent by a first device; and the sending unit is configured to send, according to the data connection request, split data to the first device through at least two radio links in multiple radio links that are established with the first device, where the at least two radio links in the multiple radio links include two radio links that are established by using different radio protocols, and one radio link of the at least two radio links in the multiple radio links is established by the first device with the device via a third device.

In a first possible implementation, the at least two radio links in the multiple radio links include: a wireless local area network WLAN link and a 3rd Generation Partnership Project 3GPP link.

According to a sixth aspect, a data splitting device is provided and includes a receiving unit and a sending unit: the receiving unit is configured to receive, through a radio link that is established between the device and a second device, split data that is sent by the second device according to a data connection request sent by a first device; and the sending unit is configured to send the split data to the first device through a radio link that is established between the device and the first device, where the radio link that is established between the device and the second device, and the radio link that is established between the device and the first device, are two radio links that are established by using different protocols.

In a first possible implementation, the device further includes a first link establishing unit and a second link establishing unit: the first link establishing unit is configured to establish a wireless local area network WLAN link with the first device; and the second link establishing unit is configured to establish a second 3rd Generation Partnership Project 3GPP link with the second device.

According to a seventh aspect, a data splitting device is provided and includes a sending apparatus, a receiving apparatus, and a processor: the processor is configured to generate a data connection request and send the data connection request to the sending apparatus; the sending apparatus is configured to send the data connection request to a second device, so that the second device executes data splitting; and the receiving apparatus is configured to receive, through at least two radio links in multiple radio links, split data that is sent by the second device according to the data connection request, where the device establishes, via a third device, one link of the two radio links with the second device, and the at least two radio links in the multiple radio links include two radio links that are established by using different radio protocols.

In a first possible implementation, the processor is further configured to establish a wireless local area network WLAN link with the third device, and establish a first 3rd Generation Partnership Project 3GPP link with the second device, where the second device establishes a second 3 GPP link with the third device.

According to an eighth aspect, a data splitting device is provided and includes a receiving apparatus, a sending apparatus, and a processor: the receiving apparatus is configured to receive a data connection request sent by a first device, and send the data connection request to the processor; and the processor is configured to instruct, according to the data connection request, the sending apparatus to send split data to the first device through at least two radio links in multiple radio links that are established with the first device, where the at least two radio links in the multiple radio links include two radio links that are established by using different radio protocols, and one radio link of the at least two radio links in the multiple radio links is established by the first device with the device via a third device.

In a first possible implementation, the at least two radio links in the multiple radio links include: a wireless local area network WLAN link and a 3rd Generation Partnership Project 3GPP link.

According to a ninth aspect, a data splitting device is provided and includes a receiving apparatus, a sending apparatus, and a processor: the receiving apparatus is configured to receive, through a radio link that is established between the device and a second device, split data that is sent by the second device according to a data connection request sent by a first device, and send the split data to the processor; and the processor is configured to instruct the sending apparatus to send the split data received by the receiving apparatus to the first device through a radio link that is established between the device and the first device, where the radio link that is established between the device and the second device, and the radio link that is established between the device and the first device, are two radio links that are established by using different protocols.

In a first possible implementation, the processor is further configured to establish a wireless local area network WLAN link with the first device, and is further configured to establish a second 3rd Generation Partnership Project 3GPP link with the second device.

According to the foregoing technical solutions, downlink data may be sent to a user equipment through different radio links in a splitting manner, thereby increasing downlink bandwidth allocated to a user, and improving user experience with data services.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a data splitting method for a first device according to Embodiment 1 of the present invention;
FIG. 2 is a schematic flowchart of a data splitting method for a second device according to Embodiment 1 of the present invention;
FIG. 3 is a schematic flowchart of a data splitting method for a third device according to Embodiment 1 of the present invention;
FIG. 4A and FIG. 4B are schematic diagrams depicting application scenarios of data splitting according to Embodiment 2 of the present invention;
FIG. 5 is a schematic interaction diagram of a data splitting method according to Embodiment 2 of the present invention;
FIG. 6A and FIG. 6B are schematic diagrams depicting application scenarios of data splitting according to Embodiment 3 of the present invention;
FIG. 7 is a schematic interaction diagram of a data splitting method according to Embodiment 3 of the present invention;
FIG. 8A and FIG. 8B are schematic block diagrams illustrating a first device for data splitting according to Embodiment 4 of the present invention;
FIG. 9A and FIG. 9B are schematic block diagrams illustrating a second device for data splitting according to Embodiment 5 of the present invention;
FIG. 10A and FIG. 10B are schematic block diagrams illustrating a third device for data splitting according to Embodiment 6 of the present invention;
FIG. 11 is a schematic block diagram illustrating a third device for data splitting according to Embodiment 7 of the present invention;
FIG. 12 is a schematic block diagram illustrating a third device for data splitting according to Embodiment 8 of the present invention; and
FIG. 13 is a schematic block diagram illustrating a third device for data splitting according to Embodiment 9 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

The technical solutions of the present invention may be applied to various communications systems, such as: a Global System for Mobile Communications (GSM, Global System for Mobile Communications), a Code Division Multiple Access (CDMA, Code Division Multiple Access) system, a Wideband Code Division Multiple Access (WCDMA, Wideband Code Division Multiple Access) system, a general packet radio service (GPRS, General Packet Radio Service) system, and a Long Term Evolution (LTE, Long Term Evolution) system.

A user equipment (UE, User Equipment), also referred to as a mobile terminal (Mobile Terminal), a mobile user equipment, and the like, may communicate with one or more core networks through a radio access network (for example, RAN, Radio Access Network). The user equipment may be a mobile terminal, such as a mobile phone (also referred to as a "cellular" phone) and a computer with a mobile terminal. For example, the user equipment may be a portable, pocket-sized, handheld, computer built-in, or in-vehicle mobile apparatus, which exchanges language and/or data with the radio access network.

A base station may be a base station (BTS, Base Transceiver Station) in GSM or CDMA, or may be a base station (NodeB) in WCDMA, or may be an evolved NodeB (eNB or e-NodeB, evolutional NodeB) in LTE, which is not limited in the present invention. However, for ease of description, the following embodiments are described by using a base station (NodeB) as an example.

At present, a terminal user can access a mobile network only through a single link: via a wireless local area network (WLAN, Wireless Local Area Network) access point (Access Point, AP for short), or by using a 3GPP (the 3rd Generation Partnership Project, 3rd Generation Partnership Project) or Bluetooth (Bluetooth) technology. Bandwidth to be allocated to a user is limited to bandwidth on a single link, which cannot meet an increasing bandwidth requirement of a user. Embodiments of the present invention provide a new idea that one or more services can be implemented through different links, so that bandwidth to be allocated to a user is increased to a sum of bandwidths on two links, data service traffic downloaded per unit time is increased, and user experience with data services is enhanced. For ease of description, some embodiments of the present invention are described by using WLAN and 3GPP technologies as an example.

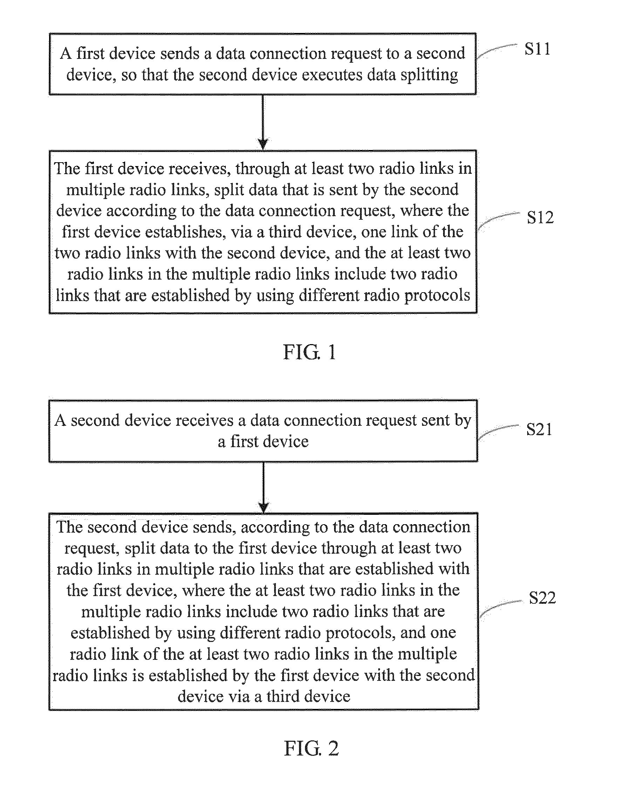

FIG. 1 is a schematic flowchart depicting a data splitting method for a first device according to Embodiment 1 of the present invention, and covers the following content. The method is executed by a first device, for example, a UE.

S 11: A first device sends a data connection request to a second device, so that the second device executes data splitting.

Before this step, the first device sends signaling to the second device, where the signaling is used to indicate that the first device supports a concurrence function. The second device may also learn, in other manners, that the first device supports a concurrence function. In the present application, when it is mentioned that the first device supports a concurrence function, it means that the first device can simultaneously receive or send data through at least two different radio links. In support of the concurrence function, the first device establishes only one radio link with the second device at this time, and establishes another radio link later. Alternatively, the first device has established multiple radio links with the second device at this time.

S12: The first device receives, through at least two radio links in multiple radio links, data that is sent by the second device according to the data connection request and is split according to a splitting strategy, where the first device establishes, via a third device, one link of the two radio links with the second device, and the at least two radio links in the multiple radio links include two radio links that are established by using different radio protocols.

Radio protocols include multiple types and support multiple technologies, for example, 3GPP, Bluetooth, and WLAN. A user equipment may establish, by using multiple radio protocols, at least two radio links supported by different protocols. For example, when the user equipment establishes at least two links, which include a 3GPP link and a WLAN link, receiving or sending data through the foregoing radio links is called implementing a concurrence function of WLAN and 3GPP.

According to this embodiment of the present invention, downlink data may be sent to a user equipment through different radio links in a splitting manner, thereby increasing downlink bandwidth allocated to a user, and improving user experience with data services.

Optionally, as a different embodiment, the at least two radio links in the multiple radio links include: a wireless local area network (WLAN) link and a 3rd Generation Partnership Project (3GPP) link.

Optionally, as a different embodiment, the first device establishes a WLAN link with the third device, and acquires, from the third device, an allocated IP address of the WLAN link and an SSID of a WLAN of the third device; and the first device establishes a first 3GPP link with the second device, where the second device establishes a second 3GPP link with the third device.

Optionally, as a different embodiment, the first device sends a data link request to the second device through the first 3GPP link.

Optionally, as a different embodiment, the first device sends to the second device the IP address of the WLAN link of the first device and the SSID of the WLAN of the third device.

Optionally, as a different embodiment, the first device performs tunnel decapsulation for received split data that is forwarded by the third device through the second 3GPP link and the WLAN link, and performs sequencing and assembling for the received split data after being performed tunnel decapsulation and split data that is to pass through the first 3GPP link, to obtain final data.

Optionally, as a different embodiment, the first device sends a data link request to the second device via the third device through the WLAN link that is established with the third device.

Optionally, as a different embodiment, the first device sends to the second device the IP address of the WLAN link of the first device and the SSID of the WLAN of the third device.

Optionally, as a different embodiment, the first device performs sequencing and assembling for received split data that is forwarded by the third device through the second 3GPP link and the WLAN link and split data that is to pass through the first 3GPP link, to obtain final data.

Optionally, as a different embodiment, the first device sends signaling to the second device, where the signaling is used to indicate that the first device supports a data concurrence function.

As a different embodiment, the technology of the present invention provides a splitting implementation solution based on a movable WLAN AP. By implementing the solution, allocated toedge users of a same cell can use more downlink bandwidth; for users in different cells, concurrence of 3GPP and WLAN can also increase downlink bandwidth allocated to terminal users. Meanwhile, independent 3GPP services are not affected.

FIG. 2 is a schematic flowchart depicting a data splitting method for a second device according to Embodiment 1 of the present invention, and covers the following content. The method is executed by a second device, for example, a network-side device RNC.

S21: A second device receives a data connection request sent by a first device.

Before this step, the first device performs signaling interaction with the second device, where the signaling is used to indicate that the first device supports a concurrence function. In support of the concurrence function, the first device establishes only one radio link with the second device at this time, and establishes another radio link later. Alternatively, the first device has established multiple radio links with the second device at this time.

S22: The second device sends, according to the data connection request and through at least two radio links in multiple radio links that are established with the first device, to the first device data that is split according to a splitting strategy, where the first device establishes, via a third device, one of the two radio links with the second device, and the at least two radio links in the multiple radio links include two radio links that are established by using different radio protocols.

According to this embodiment of the present invention, downlink data may be sent to a user equipment through different radio links in a splitting manner, thereby increasing downlink bandwidth allocated to a user, and improving user experience with data services.

Optionally, as a different embodiment, the at least two radio links in the multiple radio links include: a wireless local area network (WLAN) link and a 3rd Generation Partnership Project (3GPP) link.

Optionally, as a different embodiment, the second device establishes a first 3GPP link with the first device, and the second device establishes a second 3GPP link with the third device, where the first device establishes a WLAN link with the third device, and acquires, from the third device, an allocated IP address of the WLAN link of the first device and an SSID of a WLAN of the third device.

Optionally, as a different embodiment, the second device receives the IP address of the WLAN link of the first device and the SSID of the WLAN of the third device that are sent by the first device through the first 3GPP link, and the second device receives the SSID of the WLAN of the third device that is sent by the third device through the second 3GPP link; and the second device determines, according to a correspondence between the SSIDs of the WLAN of the third device that are sent by the first device and the third device, radio links to be used for data splitting.

Optionally, as a different embodiment, the second device performs sequence adding and tunnel encapsulation for split data that is to be forwarded by the third device through the second 3GPP link and the WLAN link, and delivers the split data by using the IP address of the WLAN link as a destination IP address; and the second device performs sequence adding for split data that is to pass through the first 3GPP link, and delivers the split data.

Optionally, as a different embodiment, the second device receives the IP address of the WLAN link of the first device and the SSID of the WLAN of the third device that are sent by the first device through the first 3GPP link, and a WLAN port number that is used to establish a service through the WLAN link, and the second device receives the SSID of the WLAN of the third device that is sent by the third device through the second 3GPP link; and the second device determines, according to a correspondence between the SSIDs of the WLAN of the third device that are sent by the first device and the third device, radio links to be used for data splitting.

Optionally, as a different embodiment, the second device performs sequence adding for split data that is to pass through the first 3GPP link, changes a destination IP address to the IP address of the WLAN link, and sends the split data to the first device by using the WLAN port number that is used to establish a service through the WLAN link as a port; and sends, via the third device through the WLAN link, to the first device split data that is to pass through the second 3GPP link.

As a different embodiment, the technology of the present invention provides a splitting implementation solution based on a movable WLAN AP. By implementing the solution, allocated toedge users of a same cell can use more downlink bandwidth; for users in different cells, concurrence of 3GPP and WLAN can also increase downlink bandwidth allocated to terminal users. Meanwhile, independent 3GPP services are not affected.

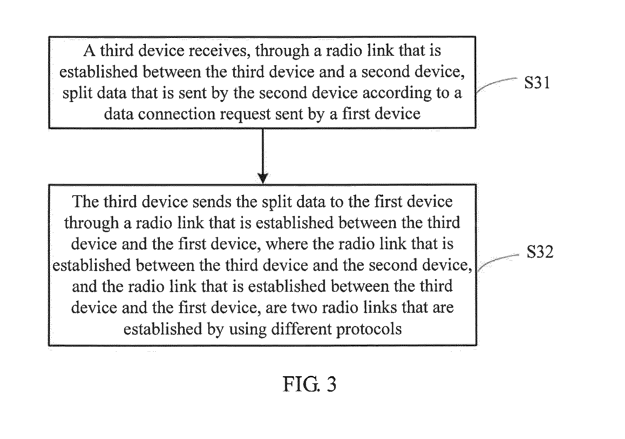

FIG. 3 is a schematic flowchart depicting a data splitting method for a third device according to Embodiment 1 of the present invention, and covers the following content. The method is executed by a third device, for example, another UE different from the UE in FIG. 1.

S31: A third device receives, through a radio link that is established between the third device and a second device, split data that is sent by the second device according to a data connection request sent by a first device.

S32: The third device sends the split data to the first device through a radio link established between the third device and the first device, where the radio link established between the third device and the second device and the radio link established between the third device and the first device are two radio links that are established by using different protocols.

According to this embodiment of the present invention, downlink data may be sent to a user equipment through different radio links in a splitting manner, thereby increasing downlink bandwidth allocated to a user, and improving user experience with data services.

Optionally, as a different embodiment, a wireless local area network (WLAN) link that is established between the third device and the first device, and a second 3rd Generation Partnership Project (3GPP) link that is established between the third device and the second device.

Optionally, as a different embodiment, after establishing the WLAN link with the first device, the third device allocates an IP address of the WLAN link of the first device to the first device, and sends an SSID of a WLAN of the third device to the first device.

Optionally, as a different embodiment, the third device sends the SSID of the WLAN of the third device to the second device through a second 3GPP link; or the third device sends the SSID of the WLAN of the third device to the second device through the second 3GPP link, and establishes an association relationship between the IP address of the WLAN link of the first device and the second 3GPP link.

Optionally, as a different embodiment, the third device forwards, according to the association relationship and through the second 3GPP link, a data connection request that is sent by the first device to the second user equipment though the WLAN link.

Optionally, as a different embodiment, the third device receives split data that is sent by the second device based on the data connection request sent by the first device, and forwards the split data to the first device through the WLAN link; or the third device receives split data that is sent by the second device based on the data connection request sent by the first device, and sends the split data to the first device through the WLAN link according to the association relationship.

As a different embodiment, the technology of the present invention provides a splitting implementation solution based on a movable WLAN AP. By implementing the solution, allocated toedge users of a same cell can use more downlink bandwidth; for users in different cells, concurrence of 3GPP and WLAN can also increase downlink bandwidth allocated to terminal users. Meanwhile, independent 3GPP services are not affected.

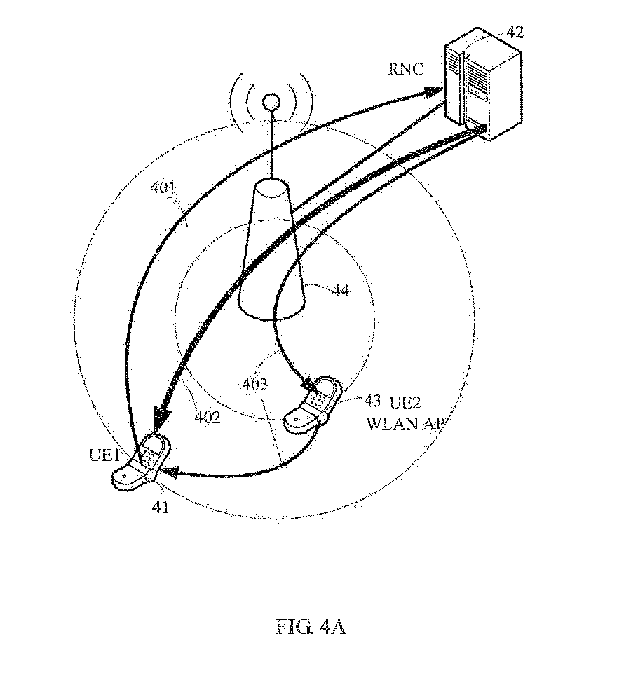

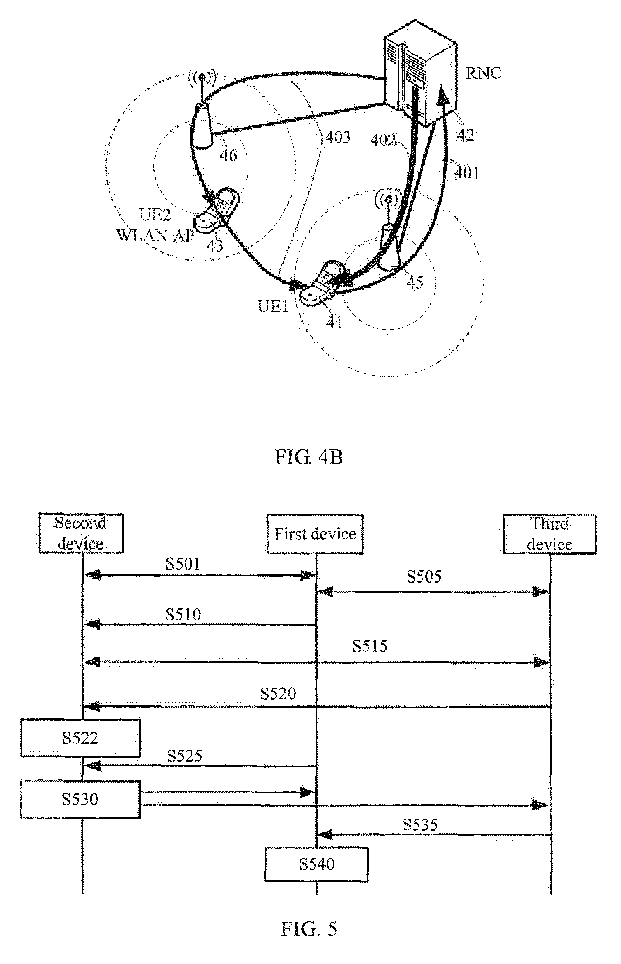

FIG. 4A and FIG. 4B are schematic diagrams illustrating two application scenarios of data splitting according to Embodiment 2 of the present invention. A first device 41 is UE1, a second device 42 is RNC, and a third device 43 is UE2, where the third device is a WLAN AP of the first device.

In FIG. 4A, the first device is a cell edge user. The first device establishes a first radio link 402 with the second device via a base station 44, which is a 3GPP link. The first device establishes a WLAN link with the third device. The third device establishes a 3GPP link with the second device via the base station 44. The first device establishes a second radio link 403 with the second device by using the WLAN link that is established with the third device and the 3GPP link that is established by the third device with the second device.

In FIG. 4B, the first device and the second device belong to different cells. The first device establishes a first radio link 402 with the second device via a base station 45, which is a 3GPP link. The first device establishes a WLAN link with the third device. The third device establishes a 3GPP link with the second device via a base station 46. The first device establishes a second radio link 403 with the second device by using the WLAN link that is established with the third device and the 3GPP link that is established by the third device with the second device, where the second radio link 403 includes the foregoing WLAN link that is established by the first device with the third device and the 3GPP link that is established by the third device with the second device.

In scenarios of FIG. 4A and FIG. 4B, the first device may send a data connection request 401 to the second device through the first radio link, where the request requires the second device to perform data sending in a splitting manner. Then split data is sent to the first device separately through the first radio link and the second radio link, namely, 402 and 403 shown in the diagrams. The first radio link and the second radio link are radio links used for data splitting. The first device may perform a concurrence function of 3GPP and WLAN through the foregoing two radio links, which means that the first device may simultaneously receive or simultaneously send data through the two radio connections that are respectively established with the second device and the third device.

With reference to the application scenarios in FIG. 4A and FIG. 4B, FIG. 5 is a schematic interaction diagram of a data splitting method according to Embodiment 2 of the present invention.

S501: A first device establishes a radio connection with a second device, for example, a 3GPP link.

The first device acquires, via the second device and from a core network, an IP address of a first 3GPP link that is allocated to the first device. The foregoing 3GPP link is also called a first 3GPP link in this specification, and is corresponding to 402 in FIG. 4A and FIG. 4B.

S505: The first device establishes a radio connection with a third device, for example, a WLAN link.

In this case, the third device sets a WLAN AP as a mobile access point of the first device, and allocates an IP address of the WLAN link to the first device. The first device acquires an SSID of a WLAN of the third device at the same time.

S510: The first device sends to the second device parameters that are acquired from the third device, such as an IP address of the WLAN link and an SSID (Service Set Identifier, service set identifier) of a WLAN of the third device. For different WLAN APs, the SSID may be a BSSID (Basic SSID, basic service set identifier) or an ESSID (Extended SSID, extended service set identifier). The SSID is a parameter of a WLAN that is formed by using the third device as a WLAN AP. The first device reports a parameter according to a specific network environment, which includes but is not limited to the foregoing parameters.

In one use case of the WLAN technology, multiple physical devices jointly serve as one WLAN AP; in this case, the SSID is an ESSID, and one of the physical devices allocates an IP address of the WLAN link to the first device. The second device needs to use a MAC address of the WLAN of the first device, the IP address of the WLAN link, and the ESSID of the WLAN of the third device, to determine which specific physical device is the third device that establishes the WLAN link with the first device. In which case, the first device and the third device further need to send the MAC address of the WLAN of the first device to the second device. When the third device establishes the WLAN link with the first device, the first device and the third device may acquire the MAC address of the WLAN of the first device by themselves.

In another use case of the WLAN technology, only one physical device serves as a WLAN AP, where the SSID of the WLAN of the physical device is a BSSID. The second device needs to determine the third device only by using an IP address of the WLAN link and the BSSID. The first device sends, through the first 3GPP link, to the second device such parameters as the foregoing IP address of the WLAN link and the SSID of the WLAN of the third device.

S515: The third device establishes a radio connection with the second device, for example, a 3GPP link.

The 3GPP link is also called a second 3GPP link in this specification. The first device establishes a second radio link with the second device by using the WLAN link that is established with the third device and the 3GPP link that is established by the third device with the second device, and the second radio link is corresponding to 403 in FIG. 4A and FIG. 4B.

S520: The third device sends the SSID of the WLAN of the third device to the second device.

The third device sends the SSID of the WLAN of the third device to the second device, which is used for the second device to determine radio links for data splitting.

S522: The second device determines radio links that are to be used for data splitting.

The second device learns, in S510, the IP address of the WLAN link of the first device and the WLAN SSID of the third device, and learns, in S520, the SSID of the WLAN of the third device. The SSIDs of the WLAN of the third device are consistent, and consequently the second device concludes that the first device has established a WLAN link with the third device. Then, the second device further considers the fact that the second device itself has established the first and second 3GPP links with the first device and the third device respectively, to determine the radio links that are to be allocated to the first device for data splitting, namely, links 402 and 403 in FIG. 4.

S525: The first device sends a data connection request to the second device.

The data connection request is corresponding to 401 in FIG. 4A and FIG. 4B. Optionally, the first device sends a data connection request to the second device, and may proactively add, into the request or another message sent later, information that the first device requests the second device to perform data splitting. Correspondingly, as another optional method, when learning, by performing the following steps, that the first device has a concurrence function, the second device may execute data splitting proactively, and deliver split data to the first device through different radio links, which is not limited by the present invention.

The first device sends the data connection request to the second device through the first 3GPP link.

S530: After receiving the data connection request, the second device performs data distribution for data that is to be sent to the first device.

Performing data distribution may use a prior-art technology, for example, splitting according to packets or splitting according to sessions (session). The second device needs to perform a sequence adding action for a service that is split according to packets. Correspondingly, after receiving the split data, the first device needs to perform a sequencing action when assembling data packets.

Data delivered through the first 3GPP link is directly delivered after sequence adding processing is performed. For example, for TCP/IP data, sequence adding processing is performed on an identification (identification) field.

For data delivered through the second 3GPP link, sequence adding and tunnel encapsulation are performed, and the data is delivered by using the IP address of the WLAN of the first device as a destination address of an outer IP address of a tunnel header. The tunnel encapsulation refers to performing tunneling processing by using a tunneling protocol, for example, the IPinIP protocol, so that the third device can forward a data packet. Correspondingly, the first device performs tunnel decapsulation after receiving the data packet that has undergone tunnel encapsulation, that is, to discard the tunnel header and extract data, so that data received through two radio links are assembled by means of sequencing.

S535: The third device receives data sent by the second device, and forwards data that belongs to the first device to the first device through the WLAN link.

The third device forwards, by using the tunneling protocol, data that belongs to the first device to the first device through the WLAN link.

S540: The first device assembles split data that is separately received from the second device and the third device, to obtain final data.

After receiving split data that is forwarded by the third device and has undergone tunnel encapsulation, the first device performs tunnel decapsulation, and sequences and assembles the obtained data and data received from the second device, to obtain final data.

In this way, the objective of increasing bandwidth allocated to a user can be achieved. The technology of the present invention provides a splitting implementation solution based on a movable WLAN AP. By implementing the solution, allocated toedge users of a same cell can use more downlink bandwidth; for users in different cells, concurrence of 3GPP and WLAN can also increase downlink bandwidth allocated to terminal users. Meanwhile, independent 3GPP services are not affected. Especially when radio link quality of an edge user in a cell is not high, a large proportion of data may be forwarded by another user in the cell whose radio link quality is relatively high, so as to ensure data service quality. In addition, when available radio bandwidth resources of users in different cells are limited, data service quality may also be ensured by using this embodiment of the present invention.

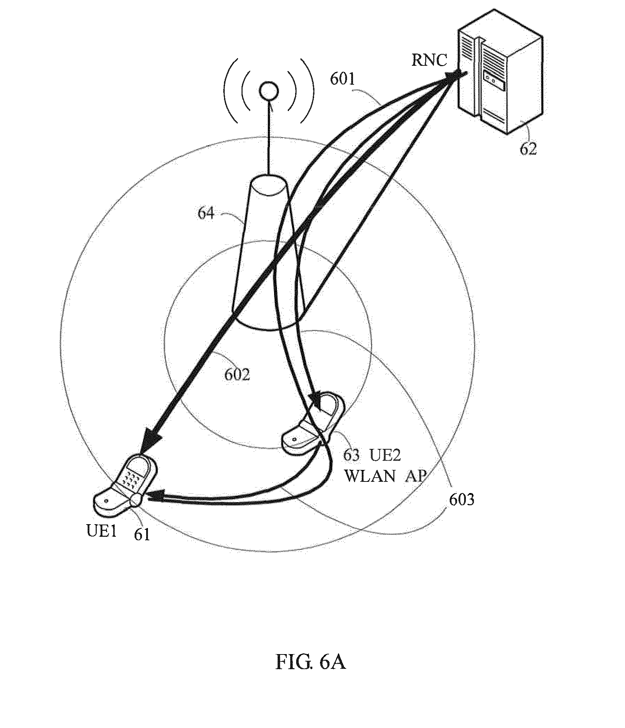

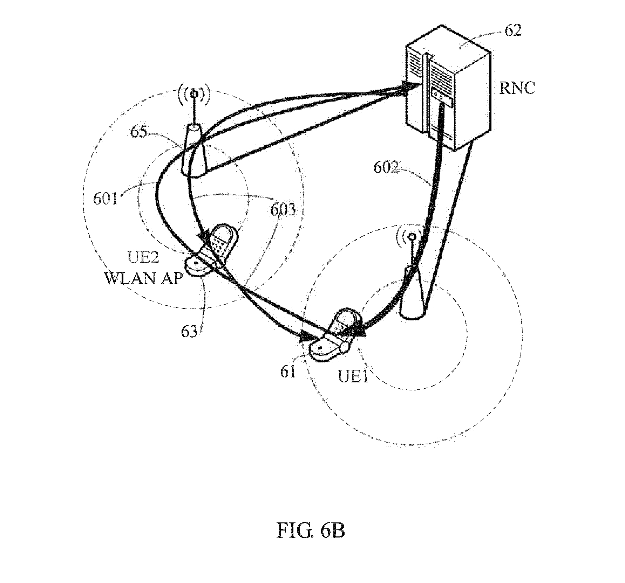

FIG. 6A and FIG. 6B are schematic diagrams illustrating application scenarios of data splitting according to Embodiment 3 of the present invention. A first device 61 is UE1, a second device 62 is RNC, and a third device 63 is UE2, where the third device is a WLAN AP of the first device.

In FIG. 6A, the first device is a cell edge user. The first device establishes a first radio link 602 with the second device via a base station 64, which is a 3GPP link. The first device establishes a WLAN link with the third device. The third device establishes a 3GPP link with the second device via the base station 64. The first device establishes a second radio link 603 with the second device by using the WLAN link that is established with the third device and the 3GPP link that is established by the third device with the second device.

In FIG. 6B, the first device and the second device belong to different cells. The first device establishes a first radio link 602 with the second device via a base station 65, which is a 3GPP link. The first device establishes a WLAN link with the third device. The third device establishes a 3GPP link with the second device via a base station 66. The first device establishes a second radio link 603 with the second device by using the WLAN link that is established with the third device and the 3GPP link that is established by the third device with the second device.

In scenarios of FIG. 6A and FIG. 6B, the first device may send a data connection request 601 to the second device through the second radio link, where the request requires the second device to perform data sending in a splitting manner. Then split data is sent to the first device separately through the first radio link and the second radio link, namely, 602 and 603 shown in the diagrams. The first radio link and the second radio link are radio links used for data splitting. The first device may perform a concurrence function of 3GPP and WLAN through the foregoing two radio links, which means that the first device may simultaneously receive or simultaneously send data through the two radio connections that are respectively established with the second device and the third device.

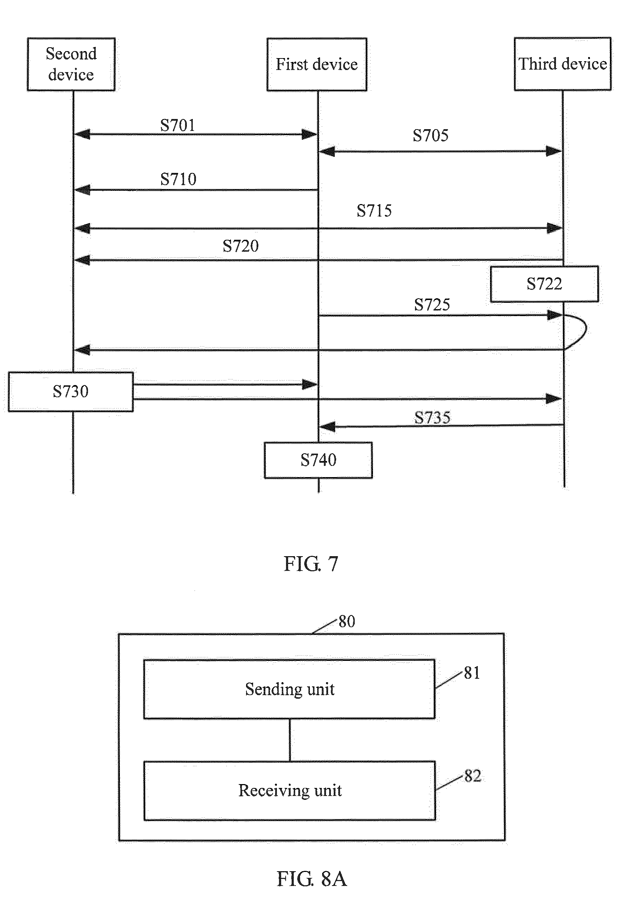

With reference to the application scenarios in FIG. 6A and FIG. 6B, FIG. 7 is a schematic interaction diagram of a data splitting method according to Embodiment 3 of the present invention.

S701: A first device establishes a radio connection with a second device, for example, a 3GPP link.

The first device acquires, via the second device and from a core network, an IP address of a 3GPP link that is allocated to the first device. The foregoing 3GPP link is also called a first 3GPP link in this specification, and is corresponding to 602 in FIG. 6A and FIG. 6B.

S705: The first device establishes a radio connection with a third device, for example, a WLAN link.

In this case, the third device sets a WLAN AP as a mobile access point of the first device, and allocates an IP address of the WLAN link to the first device. The first device acquires an SSID of a WLAN of the third device at the same time.

S710: The first device sends to the second device an IP address of the WLAN link and an SSID of a WLAN of the third device that are acquired from the third device.

The first device sends, through the first 3GPP link, to the second device the foregoing IP address of the WLAN link and the SSID of the WLAN of the third device. For different WLAN APs, the SSID may be a BSSID (Basic SSID, basic service set identifier) or an ESSID (Extended SSID, extended service set identifier). The first device reports a parameter according to a specific network environment, which includes but is not limited to the foregoing parameters.

In one use case of the WLAN technology, multiple physical devices jointly serve as one WLAN AP; in this case, the SSID is an ESSID, and one of the physical devices allocates an IP address of the WLAN link to the first device. The second device needs to use a MAC address of the WLAN of the first device, the IP address of the WLAN link, and the ESSID of the WLAN of the third device, to determine which specific physical device is the third device that establishes the WLAN link with the first device. In which case, the first device and the third device further need to separately send the MAC address of the WLAN of the first device to the second device. When the third device establishes the WLAN link with the first device, the first device and the third device may acquire the MAC address of the WLAN of the first device by themselves.

In another use case of the WLAN technology, only one physical device serves as a WLAN AP, where the SSID of the WLAN of the physical device is a BSSID. The second device needs to determine the third device only by using an IP address of the WLAN link and the BSSID.

The first device sends, through the first 3GPP link, to the second device such parameters as the foregoing IP address of the WLAN link and the SSID of the WLAN of the third device.

S715: The third device establishes a radio connection with the second device, for example, a 3GPP link.

The 3GPP link is also called a second 3GPP link in this specification. The first device establishes a second radio link with the second device by using the WLAN link that is established with the third device and the 3GPP link that is established by the third device with the second device, and the second radio link is corresponding to 603 in FIG. 6A and FIG. 6B.

S720: The third device sends the SSID (BSSID/ESSID) of the WLAN of the third device to the second device, and establishes an association relationship between the IP address of the WLAN link of the first device and the second 3GPP link.

The device serving as a WLAN AP (for example, the third device) may forward data/request that is from one device (for example, the second device) to another device (for example, the first device). In the association relationship established by the third device serving as a WLAN AP, the IP address of the WLAN link of the first device is associated with the second 3GPP link. In this way, the third device serving as a WLAN AP may send to the second device a request that is from the first device, or may send to the first device split data that is from the second device.

S722: The second device determines radio links that are to be used for data splitting.

The second device learns, in S710, the IP address of the WLAN link of the first device and the WLAN SSID of the third device, and learns, in S720, the SSID of the WLAN of the third device. The SSIDs of the WLAN of the third device are consistent, and consequently the second device concludes that the first device has established a WLAN link with the third device. Then, the second device further considers the fact that the second device itself has established the first and second 3GPP links with the first device and the third device respectively, to determine the radio links that are to be allocated to the first device for data splitting, namely, links 602 and 603 in the diagrams.

S725: The first device sends a data connection request to the second device via the third device on the WLAN link and the second 3GPP link, so that the second device executes data distribution.

The data connection request is corresponding to 601 in FIG. 6A and FIG. 6B. Optionally, the first device sends a data connection request to the second device, and may proactively add, into the request or another message sent later, information that the first device requests the second device to perform data splitting. Correspondingly, as another optional method, when learning, by performing the following steps, that the first device has a concurrence function, the second device may execute data splitting proactively, and deliver split data to the first device through different radio links, which is not limited by the present invention.

The third device forwards the data connection request to the second device according to the association relationship between the IP address of the WLAN link of the first device and the second 3GPP link.

S730: After the second device receives the data connection request, the second device executes data distribution, and delivers data separately through the 3GPP link of the first device and the 3GPP link of the third device.

A part of downlink data sent to the first device undergoes sequence adding before the data is delivered through the first 3GPP link of the second device. The other part of the downlink data sent to the first device undergoes the following processing before the data is delivered through the second 3GPP link of the second device: adding sequence, changing a destination address of a delivered packet the IP address of the WLAN link of the first device, and changing a destination port to a WLAN port from which the first device initiates a service.

S735: The third device receives data sent by the second device, and sends, according to the association relationship, data that belongs to the first device to the first device through the WLAN link.

The third device may identify, according to the association relationship, split data that is sent to the first data, so as to send the split data to the first device through the WLAN link. S740: The first device sequences and assembles the split data separately received from the second device and the third device, to obtain final data.

In this way, the objective of increasing bandwidth allocated to a user can be achieved. The technology of the present invention provides a splitting implementation solution based on a movable WLAN AP. By implementing the solution, allocated toedge users of a same cell can use more downlink bandwidth; for users in different cells, concurrence of 3GPP and WLAN can also increase downlink bandwidth allocated to terminal users. Meanwhile, independent 3GPP services are not affected. Especially when radio link quality of an edge user in a cell is not high, a large proportion of data may be forwarded by another user in the cell whose radio link quality is relatively high, so as to ensure data service quality. In addition, when available radio bandwidth resources of users in different cells are limited, data service quality may also be ensured by using this embodiment of the present invention.

A splitting strategy in this embodiment of the present invention may use a prior-art technology, for example, splitting according to packets or splitting according to sessions (session). The second device needs to perform a sequence adding action for a service that is split according to packets. Correspondingly, after receiving the split data, the first device needs to perform a sequencing action when assembling data packets.

FIG. 8A is a schematic block diagram illustrating a first device 80 for data splitting according to Embodiment 4 of the present invention. The first device 80 includes: a sending unit 81 and a receiving unit 82.

The sending unit 81 sends a data connection request to a second device, so that the second device executes data splitting.

The receiving unit 82 receives, through at least two radio links in multiple radio links, split data that is sent by the second device according to the data connection request, where the device establishes, via a third device, one link of the two radio links with the second device, and the at least two radio links in the multiple radio links include two radio links that are established by using different radio protocols.

According to this embodiment of the present invention, downlink data may be sent to a user equipment through different radio links in a splitting manner, thereby increasing downlink bandwidth allocated to a user, and improving user experience with data services.

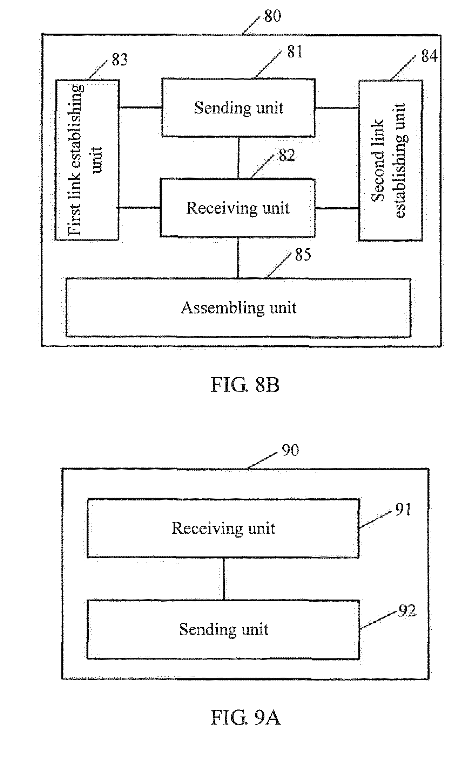

Optionally, in a different embodiment, with reference to FIG. 8B, the first device 80 may further include a first link establishing unit 83, a second link establishing unit 84, and an assembling unit 85.

Optionally, as a different embodiment, the first link establishing unit 83 establishes a wireless local area network WLAN link with the third device, and the second link establishing unit 84 establishes a first 3rd Generation Partnership Project 3GPP link with the second device, where the second device establishes a second 3GPP link with the third device.

Optionally, as a different embodiment, the receiving unit is further configured to acquire, from the third device, an allocated IP address of the WLAN link of the first device and an SSID of a WLAN of the third device.

Optionally, as a different embodiment, the sending unit 81 further sends a data link request to the second device through the first 3GPP link.

Optionally, as a different embodiment, the sending unit 81 further sends to the second device the IP address of the WLAN link of the first device and the SSID of the WLAN of the third device.

Optionally, as a different embodiment, the assembling unit 85 performs tunnel decapsulation for split data that is received by the receiving unit and is forwarded by the third device through the second 3GPP link and the WLAN link, and performs sequencing and assembling for the received split data after being performed tunnel decapsulation and split data that is to pass through the first 3GPP link, to obtain final data.

The assembling unit 85 needs to perform sequencing for a service that is split according to packets. Therefore, to perform actions of tunnel decapsulation, sequencing, and assembling, the assembling unit 85 may include a tunnel decapsulating module, a sequencing module, and an assembling module.

Optionally, as a different embodiment, the sending unit 81 sends a data link request to the second device via the third device through the WLAN link that is established with the third device.

Optionally, as a different embodiment, the sending unit 81 sends to the second device the IP address of the WLAN link of the first device and the SSID of the WLAN of the third device.

Optionally, as a different embodiment, the assembling unit 85 performs sequencing and assembling for split data that is received by the receiving unit and is forwarded by the third device through the second 3GPP link and the WLAN link, and split data that is to pass through the first 3GPP link, to obtain final data.

The assembling unit 85 needs to perform sequencing for a service that is split according to packets. Therefore, to perform actions of sequencing and assembling, the assembling unit 85 may include a sequencing module and an assembling module.

Optionally, as a different embodiment, the sending unit 81 further sends signaling to the second device, where the signaling is used to indicate that the device supports a data concurrence function.

In this way, the objective of increasing bandwidth allocated to a user can be achieved. The technology of the present invention provides a splitting implementation solution based on a movable WLAN AP. By implementing the solution, allocated toedge users of a same cell can use more downlink bandwidth; for users in different cells, concurrence of 3GPP and WLAN can also increase downlink bandwidth allocated to terminal users. Meanwhile, independent 3GPP services are not affected. Especially when radio link quality of an edge user in a cell is not high, a large proportion of data may be forwarded by another user in the cell whose radio link quality is relatively high, so as to ensure data service quality. In addition, when available radio bandwidth resources of users in different cells are limited, data service quality may also be ensured by using this embodiment of the present invention.

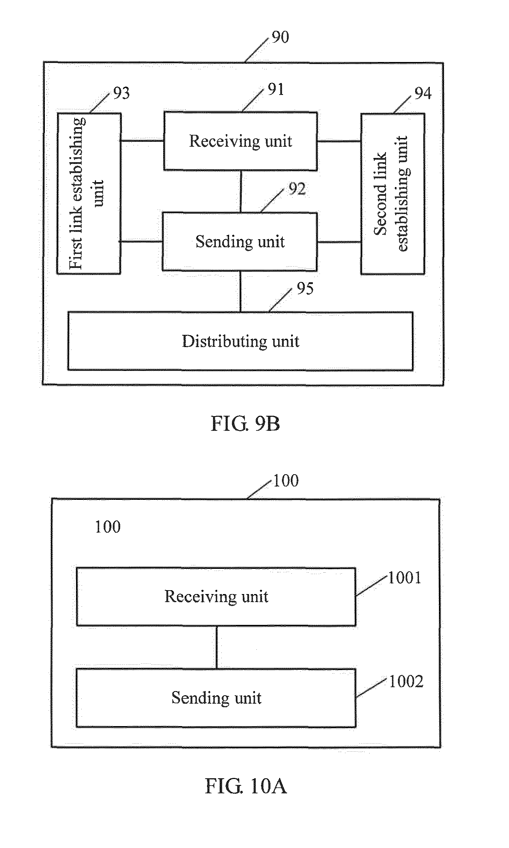

FIG. 9A and FIG. 9B are schematic block diagrams illustrating a second device 90 for data splitting according to Embodiment 5 of the present invention. The second device 90 includes a receiving unit 91 and a sending unit 92.

The receiving unit 91 receives a data connection request sent by a first device.

The sending unit 92 sends, according to the data connection request received by the receiving unit 91, split data to the first device through at least two radio links in multiple radio links that are established with the first device, where the at least two radio links in the multiple radio links include two radio links that are established by using different radio protocols, and one radio link of the at least two radio links in the multiple radio links is established by the first device with the device via a third device.

According to this embodiment of the present invention, downlink data may be sent to a user equipment through different radio links in a splitting manner, thereby increasing downlink bandwidth allocated to a user, and improving user experience with data services.

Optionally, in a different embodiment, with reference to FIG. 9B, the second device 90 may further include a first link establishing unit 93, a second link establishing unit 94, and a distributing unit 95.

Optionally, as a different embodiment, the at least two radio links in the multiple radio links include: a wireless local area network (WLAN) link and a 3rd Generation Partnership Project (3GPP) link.

The first link establishing unit 93 establishes a first 3GPP link with the first device.

The second link establishing unit 94 establishes a second 3GPP link with the third device. The first device establishes a WLAN link with the third device, and acquires, from the third device, an allocated IP address of the WLAN link of the first device and an SSID of a WLAN of the third device.

Optionally, as a different embodiment, the receiving unit 91 further receives the IP address of the WLAN link of the first device and the SSID of the WLAN of the third device that are sent by the first device through the first 3GPP link, and the receiving unit 91 further receives the SSID of the WLAN of the third device that is sent by the third device through the second 3GPP link; and the sending unit 92 further determines, according to a correspondence between the SSIDs of the WLAN of the third device that are sent by the first device and the third device, radio links to be used for data splitting.

Optionally, as a different embodiment, the distributing unit 95 performs sequence adding and tunnel encapsulation for split data that is to be forwarded by the third device through the second 3GPP link and the WLAN link, and the sending unit delivers the split data by using the IP address of the WLAN link as a destination IP address; and the distributing unit 95 performs sequence adding for split data that is to pass through the first 3GPP link, and the sending unit 92 delivers the split data.

To perform actions of sequence adding, tunnel encapsulation, and distributing, as an embodiment, the distributing unit 95 may include a sequence adding module, a tunnel encapsulating module, and a distributing module.

Optionally, as a different embodiment, the receiving unit 91 is further configured to receive the IP address of the WLAN link of the first device and the SSID of the WLAN of the third device that are sent by the first device through the first 3GPP link, and a WLAN port number that is used to establish a service through the WLAN link, and receive the SSID of the WLAN of the third device that is sent by the third device through the second 3GPP link; and the sending unit 92 determines, according to a correspondence between the SSIDs of the WLAN of the third device that are sent by the first device and the third device, radio links to be used for data splitting.

Optionally, as a different embodiment, the distributing unit 95 performs sequence adding for split data that is to pass through the first 3GPP link, changes a destination IP address to the IP address of the WLAN link, and the sending unit sends the split data to the first device by using the WLAN port number that is used to establish a service through the WLAN link as a port; the sending unit 92 sends, via the third device through the WLAN link, to the first device split data that is to pass through the second 3GPP link.

To perform actions of sequence adding and distributing, as an embodiment, the distributing unit 95 may include a sequence adding module and a distributing module.

In this way, the objective of increasing bandwidth allocated to a user can be achieved. The technology of the present invention provides a splitting implementation solution based on a movable WLAN AP. By implementing the solution, allocated toedge users of a same cell can use more downlink bandwidth; for users in different cells, concurrence of 3GPP and WLAN can also increase downlink bandwidth allocated to terminal users. Meanwhile, independent 3GPP services are not affected. Especially when radio link quality of an edge user in a cell is not high, a large proportion of data may be forwarded by another user in the cell whose radio link quality is relatively high, so as to ensure data service quality. In addition, when available radio bandwidth resources of users in different cells are limited, data service quality may also be ensured by using this embodiment of the present invention.

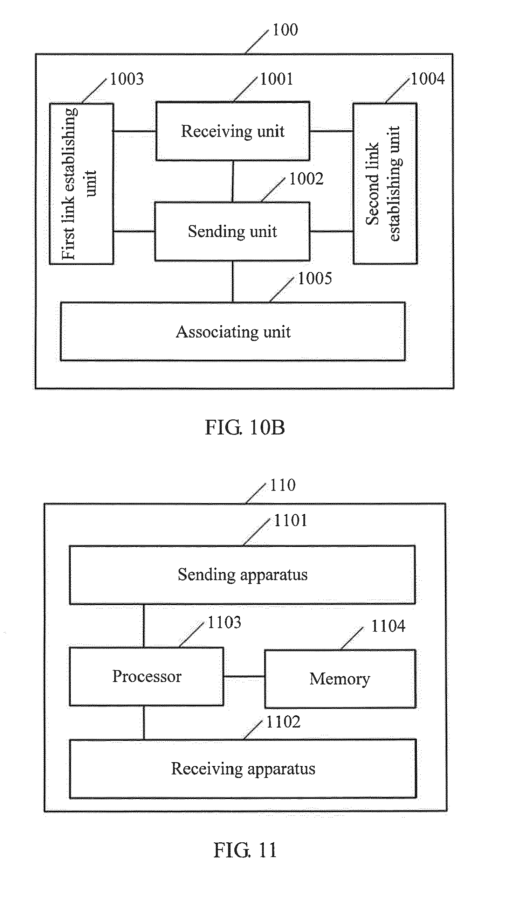

FIG. 10 is a schematic block diagram illustrating a third device 100 for data splitting according to Embodiment 6 of the present invention. The third device 100 includes a receiving unit 1001 and a sending unit 1002.

The receiving unit 1001 receives, through a radio link that is established between the device and a second device, split data that is sent by the second device according to a data connection request sent by a first device.

The sending unit 1002 sends the split data received by the receiving unit 1001 to the first device through a radio link that is established between the device and the first device, where the radio link that is established between the device and the second device, and the radio link that is established between the device and the first device, are two radio links that are established by using different protocols.

According to this embodiment of the present invention, downlink data may be sent to a user equipment through different radio links in a splitting manner, thereby increasing downlink bandwidth allocated to a user, and improving user experience with data services.

Optionally, the at least two radio links in the multiple radio links include: a wireless local area network (WLAN) link and a 3rd Generation Partnership Project (3GPP) link.

Optionally, in a different embodiment, as shown in FIG. 10B, the device further includes a first link establishing unit 1003, a second link establishing unit 1004, and an associating unit 1005.

Optionally, as a different embodiment, the first link establishing unit 1003 establishes a wireless local area network WLAN link with the first device.

Optionally, as a different embodiment, the second link establishing unit 1004 establishes a second 3rd Generation Partnership Project 3GPP link with the second device.

Optionally, as a different embodiment, the sending unit 1002 further sends to the first device an allocated IP address of the WLAN link of the first device and an SSID of a WLAN of the device.

Optionally, as a different embodiment, the sending unit 1002 further sends the SSID of the WLAN of the third device to the second device through the second 3GPP link; or the sending unit 1002 further sends the SSID of the WLAN of the third device to the second device through the second 3GPP link, and the associating unit 1005 is configured to establish an association relationship between the IP address of the WLAN link of the first device and the second 3GPP link.

Optionally, as a different embodiment, the sending unit 1002 further forwards, according to the association relationship and through the second 3GPP link, a data connection request that is sent by the first device to the second user equipment though the WLAN link.

Optionally, as a different embodiment, the receiving unit 1001 further receives split data that is sent by the second device based on the data connection request sent by the first device, and the sending unit forwards the split data to the first device through the WLAN link; or the receiving unit 1001 further receives split data that is sent by the second device based on the data connection request sent by the first device, and the sending unit sends the split data to the first device through the WLAN link according to the association relationship.

In this way, the objective of increasing bandwidth allocated to a user is increased can be achieved. The technology of the present invention provides a splitting implementation solution based on a movable WLAN AP. By implementing the solution, allocated toedge users of a same cell can use more downlink bandwidth; for users in different cells, concurrence of 3GPP and WLAN can also increase downlink bandwidth allocated to terminal users. Meanwhile, independent 3GPP services are not affected. Especially when radio link quality of an edge user in a cell is not high, a large proportion of data may be forwarded by another user in the cell whose radio link quality is relatively high, so as to ensure data service quality. In addition, when available radio bandwidth resources of users in different cells are limited, data service quality may also be ensured by using this embodiment of the present invention.

A communications system in an embodiment of the present invention may include any device in the foregoing Embodiment 4 to Embodiment 6.

FIG. 11 is a schematic block diagram of a first device 110 of data splitting according to Embodiment 7 of the present invention. The first device 110 includes: a sending apparatus 1101, a receiving apparatus 1102, a processor 1103, and a memory 1104.

The processor 1103 is configured to generate a data connection request and send the data connection request to the sending apparatus 1101.

The sending apparatus 1101 sends the data connection request to a second device, so that the second device executes data splitting.

The receiving apparatus 1102 receives, through at least two radio links in multiple radio links, split data that is sent by the second device according to the data connection request sent by the sending apparatus 1101, and sends the received split data to the processor 1103 for processing.

The first device establishes, via a third device, one link of the two radio links with the second device, and the at least two radio links in the multiple radio links include two radio links that are established by using different radio protocols.

The processor 1103 sends an instruction to the sending apparatus 1101 and the receiving apparatus 1102, to execute the foregoing operations. The memory 1104 is connected to the processor by using a bus system, and is configured to store an instruction that instructs the processor 1103 to execute the foregoing operations, an intermediate result, or related data.

According to this embodiment of the present invention, downlink data may be sent to a user equipment through different radio links in a splitting manner, thereby increasing downlink bandwidth allocated to a user, and improving user experience with data services.

Optionally, in a different embodiment, the at least two radio links in the multiple radio links that are allocated to the device include: a wireless local area network (WLAN) link and a 3rd Generation Partnership Project (3GPP) link.

The processor 1103 further establishes a WLAN link with the third device.

The processor 1103 further establishes a first 3GPP link with the second device, where the second device establishes a second 3GPP link with the third device.

Optionally, as a different embodiment, the receiving apparatus 1102 further acquires, from the third device, an allocated IP address of the WLAN link of the first device and an SSID of a WLAN of the third device.

Optionally, as a different embodiment, the sending apparatus 1101 further sends a data link request to the second device through the first 3GPP link.

Optionally, as a different embodiment, the sending apparatus 1101 further sends to the second device the IP address of the WLAN link of the first device and the SSID of the WLAN of the third device.

Optionally, as a different embodiment, the processor 1103 further performs tunnel decapsulation for split data that is received by the receiving apparatus 1102 and is forwarded by the third device through the second 3GPP link and the WLAN link, and performs sequencing and assembling for the received split data after being performed tunnel decapsulation and split data that is to pass through the first 3GPP link, to obtain final data.

Optionally, as a different embodiment, the sending apparatus 1101 further sends a data link request to the second device via the third device through the WLAN link that is established with the third device.

Optionally, as a different embodiment, the sending apparatus 1101 further sends to the second device the IP address of the WLAN link of the first device and the SSID of the WLAN of the third device.

Optionally, as a different embodiment, the processor 1103 further performs sequencing and assembling for split data that is received by the receiving apparatus and is forwarded by the third device through the second 3GPP link and the WLAN link, and split data that is to pass through the first 3GPP link, to obtain final data.

Optionally, as a different embodiment, the sending apparatus 1101 further sends signaling to the second device, where the signaling indicates that the device supports a data concurrence function.

In this way, the objective of increasing bandwidth allocated to a user can be achieved. The technology of the present invention provides a splitting implementation solution based on a movable WLAN AP. By implementing the solution, allocated toedge users of a same cell can use more downlink bandwidth; for users in different cells, concurrence of 3GPP and WLAN can also increase downlink bandwidth allocated to terminal users. Meanwhile, independent 3GPP services are not affected. Especially when radio link quality of an edge user in a cell is not high, a large proportion of data may be forwarded by another user in the cell whose radio link quality is relatively high, so as to ensure data service quality. In addition, when available radio bandwidth resources of users in different cells are limited, data service quality may also be ensured by using this embodiment of the present invention.

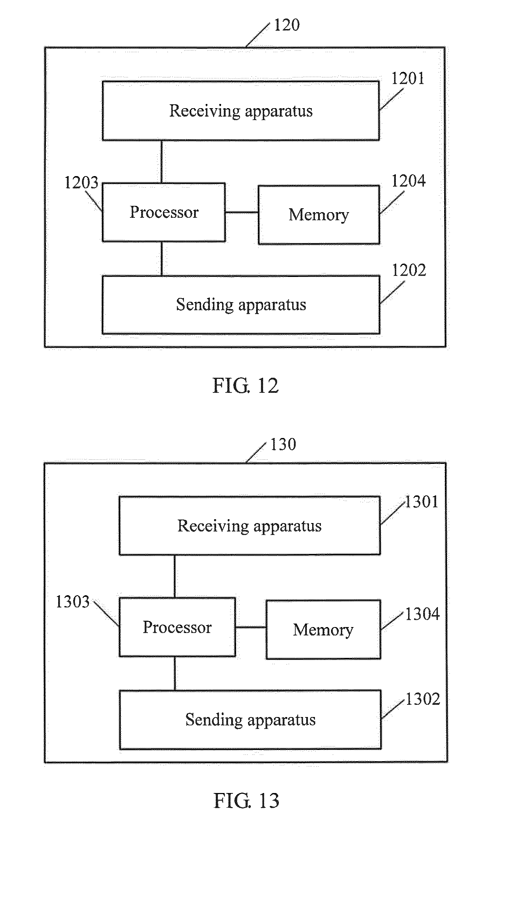

FIG. 12 is a schematic block diagram illustrating a second device 120 for data splitting according to Embodiment 8 of the present invention. The second device 120 includes: a receiving apparatus 1201, a sending apparatus 1202, a processor 1203, and a memory 1204.

The receiving apparatus 1201 receives a data connection request sent by a first device, and sends the data connection request to the processor 1203.

The processor 1203 instructs, according to the data connection request received by the receiving apparatus 1201, the sending apparatus 1202 to send split data to the first device through at least two radio links in multiple radio links that are established with the first device, where the at least two radio links in the multiple radio links include two radio links that are established by using different radio protocols, and one radio link of the at least two radio links in the multiple radio links is established by the first device with the device via a third device.

The processor 1203 sends an instruction to the sending apparatus 1201 and the receiving apparatus 1202, to execute the foregoing operations. The memory 1204 is connected to the processor by using a bus system, and is configured to store an instruction that instructs the processor 1203 to execute the foregoing operations, an intermediate result, or related data.

According to this embodiment of the present invention, downlink data may be sent to a user equipment through different radio links in a splitting manner, thereby increasing downlink bandwidth allocated to a user, and improving user experience with data services.

Optionally, as a different embodiment, the at least two radio links in the multiple radio links that are allocated to the device include: a wireless local area network (WLAN) link and a 3rd Generation Partnership Project (3GPP) link.

The processor 1204 further establishes a first 3GPP link with the first device, and further establishes a second 3GPP link with the third device, where the first device establishes a WLAN link with the third device, and acquires, from the third device, an allocated IP address of the WLAN link of the first device and an SSID of a WLAN of the third device.

Optionally, as a different embodiment, the receiving apparatus 1201 further receives the IP address of the WLAN link of the first device and the SSID of the WLAN of the third device that are sent by the first device through the first 3GPP link, and the receiving apparatus 1201 further receives the SSID of the WLAN of the third device that is sent by the third device through the second 3GPP link; and the processor 1203 further determines, according to a correspondence between the SSIDs of the WLAN of the third device that are sent by the first device and the third device, radio links to be used for data splitting.

Optionally, as a different embodiment, the processor 1203 further performs sequence adding and tunnel encapsulation for split data that is to be forwarded by the third device through the second 3GPP link and the WLAN link, and the sending apparatus 1202 delivers the split data by using the IP address of the WLAN link as a destination IP address; the processor 1203 performs sequence adding for split data that is to pass through the first 3GPP link, and the sending apparatus 1202 delivers the split data.

Optionally, as a different embodiment, the receiving apparatus 1201 further receives the IP address of the WLAN link of the first device and the SSID of the WLAN of the third device that are sent by the first device through the first 3GPP link, and a WLAN port number that is used to establish a service through the WLAN link, and receives the SSID of the WLAN of the third device that is sent by the third device through the second 3GPP link; and the processor 1203 determines, according to a correspondence between the SSIDs of the WLAN of the third device that are sent by the first device and the third device, radio links to be used for data splitting.

Optionally, as a different embodiment, the processor 1203 further performs sequence adding for split data that is to pass through the first 3GPP link, changes a destination IP address to the IP address of the WLAN link, and the sending apparatus 1202 sends the split data to the first device by using the WLAN port number that is used to establish a service through the WLAN link as a port; the sending apparatus 1202 sends, via the third device through the WLAN link, to the first device split data that is to pass through the second 3GPP link.

In this way, the objective of increasing bandwidth allocated to a user can be achieved. The technology of the present invention provides a splitting implementation solution based on a movable WLAN AP. By implementing the solution, allocated toedge users of a same cell can use more downlink bandwidth; for users in different cells, concurrence of 3GPP and WLAN can also increase downlink bandwidth allocated to terminal users. Meanwhile, independent 3GPP services are not affected. Especially when radio link quality of an edge user in a cell is not high, a large proportion of data may be forwarded by another user in the cell whose radio link quality is relatively high, so as to ensure data service quality. In addition, when available radio bandwidth resources of users in different cells are limited, data service quality may also be ensured by using this embodiment of the present invention.

FIG. 13 is a schematic block diagram illustrating a third device 130 for data splitting according to Embodiment 9 of the present invention. The third device 100 includes: a receiving apparatus 1301, a sending apparatus 1302, a processor 1303, and a memory 1304.

The receiving apparatus 1301 receives, through a radio link that is established between the device and a second device, split data that is sent by the second device according to a data connection request sent by a first device, and sends the split data to the processor 1303.

The processor 1303 instructs the sending apparatus 1302 to send the split data received by the receiving apparatus 1301 to the first device through a radio link that is established between the device and the first device, where the radio link that is established between the device and the second device, and the radio link that is established between the device and the first device, are two radio links that are established by using different protocols.

The processor 1303 sends an instruction to the receiving apparatus 1301 and the sending apparatus 1302, to execute the foregoing operations. The memory 1304 is connected to the processor by using a bus system, and is configured to store an instruction that instructs the processor 1303 to execute the foregoing operations, an intermediate result, or related data.

According to this embodiment of the present invention, downlink data may be sent to a user equipment through different radio links in a splitting manner, thereby increasing downlink bandwidth allocated to a user, and improving user experience with data services.

Optionally, as a different embodiment, the processor 1303 further establishes a wireless local area network WLAN link with the first device, and further establishes a second 3rd Generation Partnership Project 3GPP link with the second device.

Optionally, as a different embodiment, the sending apparatus 1302 further sends to the first device an allocated IP address of the WLAN link of the first device and an SSID of a WLAN of the device.

Optionally, as a different embodiment, the sending apparatus 1302 further sends the SSID of the WLAN of the third device to the second device through the second 3GPP link; or the sending apparatus 1302 further sends the SSID of the WLAN of the third device to the second device through the second 3GPP link, and the processor establishes an association relationship between the IP address of the WLAN link of the first device and the second 3GPP link.

Optionally, as a different embodiment, the processor 1303 further instructs, according to the association relationship, the sending apparatus 1302 to forward, through the second 3GPP link, a data connection request that is sent by the first device to the second user equipment though the WLAN link.

Optionally, as a different embodiment, the receiving apparatus 1301 further receives split data that is sent by the second device based on the data connection request sent by the first device, and the processor 1303 instructs the sending apparatus 1302 to forward the split data to the first device through the WLAN link; or the receiving apparatus 1301 further receives split data that is sent by the second device based on the data connection request sent by the first device, and the processor 1303 sends the split data to the first device through the WLAN link according to the association relationship.

In this way, the objective of increasing bandwidth allocated to a user can be achieved. The technology of the present invention provides a splitting implementation solution based on a movable WLAN AP. By implementing the solution, allocated toedge users of a same cell can use more downlink bandwidth; for users in different cells, concurrence of 3GPP and WLAN can also increase downlink bandwidth allocated to terminal users. Meanwhile, independent 3GPP services are not affected. Especially when radio link quality of an edge user in a cell is not high, a large proportion of data may be forwarded by another user in the cell whose radio link quality is relatively high, so as to ensure data service quality. In addition, when available radio bandwidth resources of users in different cells are limited, data service quality may also be ensured by using this embodiment of the present invention.

A communications system in an embodiment of the present invention may include any device in the foregoing Embodiment 7 to Embodiment 9.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium, and includes several instructions for instructing a computer device (which may be a personal computer, a server, or a network device) to perform all or a part of the steps of the methods described in the embodiments of the present invention. The foregoing storage medium includes any medium that can store program code, such as a USB flash drive, a movable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A data splitting method, comprising:
sending, by a first device, a data connection request to a second device, so that the second device executes data splitting; and
receiving, by the first device through at least two radio links in multiple radio links, split data that is sent by the second device according to the data connection request, wherein
the first device establishes, via a third device, one link of the two radio links with the second device, and the at least two radio links in the multiple radio links comprise two radio links that are established by using different radio protocols.

2. The method according to claim 1, wherein the at least two radio links in the multiple radio links comprise:
a wireless local area network WLAN link and a 3rd Generation Partnership Project 3GPP link.

3. The method according to claim 1 or 2, wherein the method further comprises:
a WLAN link is established between the first device and the third device, and acquiring, by the first device, from the third device, an allocated IP address of the WLAN link and a service set identifier SSID of a WLAN of the third device; and
establishing, by the first device, a first 3GPP link with the second device, wherein the second device establishes a second 3GPP link with the third device.

4. The method according to claim 3, wherein the sending, by a first device, a data connection request to a second device comprises:
sending, by the first device, a data link request to the second device through the first 3GPP link.

5. The method according to claim 4, wherein the method further comprises:
sending, by the first device, to the second device the IP address of the WLAN link of the first device and the SSID of the WLAN of the third device.

6. The method according to claim 5, wherein the method further comprises:
performing tunnel decapsulation, by the first device, for received split data that is forwarded by the third device through the second 3GPP link and the WLAN link, and performing sequencing and assembling for the received split data after being performed tunnel decapsulation and split data that is to pass through the first 3GPP link, to obtain final data.

7. The method according to claim 3, wherein the sending, by a first device, a data connection request to a second device comprises:
sending, by the first device, a data link request to the second device via the third device through the WLAN link that is established with the third device.

8. The method according to claim 7, wherein the method further comprises:
sending, by the first device, to the second device the IP address of the WLAN link of the first device and the SSID of the WLAN of the third device.

9. The method according to claim 8, wherein the method further comprises:
performing sequencing and assembling, by the first device, on received split data that is forwarded by the third device through the second 3GPP link and the WLAN link and split data that is to pass through the first 3GPP link, to obtain final data.

10. The method according to any one of claims 1 to 9, wherein the method further comprises:
sending, by the first device, signaling to the second device, wherein the signaling is used to indicate that the first device supports a data concurrence function.

11. A data splitting method, comprising:
receiving, by a second device, a data connection request sent by a first device; and
sending, by the second device according to the data connection request, split data to the first device through at least two radio links in multiple radio links that are established with the first device, wherein
the at least two radio links in the multiple radio links comprise two radio links that are established by using different radio protocols, and one radio link of the at least two radio links in the multiple radio links is established by the first device with the second device via a third device.

12. The method according to claim 11, wherein the at least two radio links in the multiple radio links comprise:
a wireless local area network WLAN link and a 3rd Generation Partnership Project 3GPP link.

13. The method according to claim 11 or 12, wherein the method further comprises:
establishing, by the second device, a first 3GPP link with the first device, and establishing, by the second device, a second 3GPP link with the third device, wherein the first device establishes a WLAN link with the third device, and acquires, from the third device, an allocated IP address of the WLAN link of the first device and an SSID of a WLAN of the third device.

14. The method according to claim 13, wherein the method further comprises:
receiving, by the second device, the IP address of the WLAN link of the first device and the SSID of the WLAN of the third device that are sent by the first device through the first 3GPP link, and
receiving, by the second device, the SSID of the WLAN of the third device that is sent by the third device through the second 3GPP link; and
determining, by the second device according to a correspondence between the SSIDs of the WLAN of the third device that are sent by the first device and the third device, radio links to be used for data splitting.

15. The method according to claim 14, wherein the method specifically comprises:
performing sequence adding and tunnel encapsulation, by the second device, for split data that is to be forwarded by the third device through the second 3GPP link and the WLAN link, and delivering the split data by using the IP address of the WLAN link as a destination IP address; and
performing sequence adding, by the second device, for split data that is to pass through the first 3GPP link, and delivering the split data.

16. The method according to claim 13, wherein the method further comprises:
receiving, by the second device, the IP address of the WLAN link of the first device and the SSID of the WLAN of the third device that are sent by the first device through the first 3GPP link, and a WLAN port number that is used to establish a service through the WLAN link, and
receiving, by the second device, the SSID of the WLAN of the third device that is sent by the third device through the second 3GPP link; and
determining, by the second device according to a correspondence between the SSIDs of the WLAN of the third device that are sent by the first device and the third device, radio links to be used for data splitting.

17. The method according to claim 16, wherein the method specifically comprises:
performing sequence adding, by the second device, for split data that is to pass through the first 3GPP link, changing a destination IP address to the IP address of the WLAN link, and sending the split data to the first device by using the WLAN port number that is used to establish a service through the WLAN link as a port; and
sending, via the third device through the WLAN link, to the first device split data that is to pass through the second 3GPP link.

18. A data splitting method, comprising:
receiving, by a third device through a radio link that is established between the third device and a second device, split data that is sent by the second device according to a data connection request sent by a first device; and
sending, by the third device, the split data to the first device through a radio link that is established between the third device and the first device, wherein
the radio link that is established between the third device and the second device, and the radio link that is established between the third device and the first device, are two radio links that are established by using different protocols.

19. The method according to claim 18, wherein the two radio links are respectively:
a wireless local area network WLAN link that is established between the third device and the first device, and a second 3rd Generation Partnership Project 3GPP link that is established between the third device and the second device.

20. The method according to claim 18 or 19, wherein the method further comprises:
after establishing the WLAN link with the first device, allocating, by the third device, an IP address of the WLAN link of the first device to the first device, and sending an SSID of a WLAN of the third device to the first device.

21. The method according to claim 20, wherein the method further comprises:
sending, by the third device, the SSID of the WLAN of the third device to the second device through the second 3GPP link; or
sending, by the third device, the SSID of the WLAN of the third device to the second device through the second 3GPP link, and establishing an association relationship between the IP address of the WLAN link of the first device and the second 3GPP link.

22. The method according to claim 21, wherein the method further comprises:
forwarding, by the third device according to the association relationship and through the second 3GPP link, a data connection request that is sent by the first device to the second user equipment through the WLAN link.

23. The method according to claim 22, comprising:
receiving, by the third device, the split data that is sent by the second device based on the data connection request sent by the first device, and forwarding the split data to the first device through the WLAN link; or
receiving, by the third device, the split data that is sent by the second device based on the data connection request sent by the first device, and sending the split data to the first device through the WLAN link according to the association relationship.

24. A data splitting device, comprising a sending unit and a receiving unit:
the sending unit is configured to send a data connection request to a second device, so that the second device executes data splitting; and
the receiving unit is configured to receive, through at least two radio links in multiple radio links, split data that is sent by the second device according to the data connection request, wherein
the device establishes, via a third device, one link of the two radio links with the second device, and the at least two radio links in the multiple radio links comprise two radio links that are established by using different radio protocols.

25. The device according to claim 1, wherein the device further comprises a first link establishing unit and a second link establishing unit:
the first link establishing unit is configured to establish a wireless local area network WLAN link with the third device, and the second link establishing unit is configured to establish a first 3rd Generation Partnership Project 3GPP link with the second device, wherein the second device establishes a second 3GPP link with the third device.

26. The device according to claim 24 or 25, wherein:
the receiving unit is further configured to acquire, from the third device, an allocated IP address of the WLAN link of the first device and an SSID of a WLAN of the third device.

27. The device according to claim 26, wherein:
the sending unit is further configured to send a data link request to the second device through the first 3GPP link.

28. The device according to claim 27, wherein:
the sending unit is further configured to send to the second device the IP address of the WLAN link of the first device and the SSID of the WLAN of the third device.

29. The device according to claim 28, wherein the device further comprises an assembling unit:
the assembling unit is configured to perform tunnel decapsulation for split data that is received by the receiving unit and is forwarded by the third device through the second 3GPP link and the WLAN link, and perform sequencing and assembling for the received split data after being performed tunnel decapsulation and split data that is to pass through the first 3GPP link, to obtain final data.

30. The device according to claim 26, wherein:
the sending unit is further configured to send a data link request to the second device via the third device through the WLAN link that is established with the third device.

31. The device according to claim 30, wherein:
the sending unit is further configured to send to the second device the IP address of the WLAN link of the first device and the SSID of the WLAN of the third device.

32. The device according to claim 31, wherein the device further comprises an assembling unit:
the assembling unit is configured to perform sequencing and assembling for split data that is received by the receiving unit and is forwarded by the third device through the second 3GPP link and the WLAN link, and split data that is to pass through the first 3GPP link, to obtain final data.

33. The device according to any one of claims 24 to 32, wherein:
the sending unit is further configured to send signaling to the second device, wherein the signaling is used to indicate that the device supports a data concurrence function.

34. A data splitting device, comprising a receiving unit and a sending unit:
the receiving unit is configured to receive a data connection request sent by a first device; and
the sending unit is configured to send, according to the data connection request, split data to the first device through at least two radio links in multiple radio links that are established with the first device, wherein
the at least two radio links in the multiple radio links comprise two radio links that are established by using different radio protocols, and one radio link of the at least two radio links in the multiple radio links is established by the first device with the device via a third device.

35. The device according to claim 34, wherein the at least two radio links in the multiple radio links comprise:
a wireless local area network WLAN link and a 3rd Generation Partnership Project 3GPP link.

36. The device according to claim 34 or 35, wherein the device further comprises a first link establishing unit and a second link establishing unit:
the first link establishing unit is configured to establish a first 3GPP link with the first device, and the second link establishing unit is configured to establish a second 3GPP link with the third device, wherein the first device establishes a WLAN link with the third device, and acquires, from the third device, an allocated IP address of the WLAN link of the first device and an SSID of a WLAN of the third device.

37. The device according to claim 36, wherein:
the receiving unit is further configured to receive the IP address of the WLAN link of the first device and the SSID of the WLAN of the third device that are sent by the first device through the first 3GPP link, and
the receiving unit is further configured to receive the SSID of the WLAN of the third device that is sent by the third device through the second 3GPP link; and
the sending unit is further configured to determine, according to a correspondence between the SSIDs of the WLAN of the third device that are sent by the first device and the third device, radio links to be used for data splitting.

38. The device according to claim 37, wherein the device further comprises a distributing unit:
the distributing unit is configured to perform sequence adding and tunnel encapsulation for split data that is to be forwarded by the third device through the second 3GPP link and the WLAN link, so that the sending unit delivers the split data by using the IP address of the WLAN link as a destination IP address; and
perform sequence adding for split data that is to pass through the first 3GPP link, so that the sending unit delivers the split data.

39. The device according to claim 36, wherein:
the receiving unit is further configured to receive the IP address of the WLAN link of the first device and the SSID of the WLAN of the third device that are sent by the first device through the first 3GPP link, and a WLAN port number that is used to establish a service through the WLAN link, and
receive the SSID of the WLAN of the third device that is sent by the third device through the second 3GPP link; and
the sending unit determines, according to a correspondence between the SSIDs of the WLAN of the third device that are sent by the first device and the third device, radio links to be used for data splitting.

40. The device according to claim 39, wherein the device further comprises a distributing unit:
the distributing unit is configured to perform sequence adding for split data that is to pass through the first 3 GPP link, change a destination IP address to the IP address of the WLAN link, so that the sending unit sends the split data to the first device by using the WLAN port number that is used to establish a service through the WLAN link as a port, and
the sending unit sends, via the third device through the WLAN link, to the first device split data that is to pass through the second 3GPP link.

41. A data splitting device, comprising a receiving unit and a sending unit:
the receiving unit is configured to receive, through a radio link that is established between the device and a second device, split data that is sent by the second device according to a data connection request sent by a first device; and
the sending unit is configured to send the split data to the first device through a radio link that is established between the device and the first device, wherein
the radio link that is established between the device and the second device, and the radio link that is established between the device and the first device, are two radio links that are established by using different protocols.

42. The device according to claim 41, wherein the device further comprises a first link establishing unit and a second link establishing unit:
the first link establishing unit is configured to establish a wireless local area network WLAN link with the first device; and the second link establishing unit is configured to establish a second 3rd Generation Partnership Project 3GPP link with the second device.

43. The device according to claim 41 or 42, wherein:
the sending unit is further configured to send to the first device an allocated IP address of the WLAN link of the first device and an SSID of a WLAN of the device.

44. The device according to claim 43, wherein:
the sending unit is further configured to send the SSID of the WLAN of the third device to the second device through the second 3GPP link; or
the sending unit is further configured to send the SSID of the WLAN of the third device to the second device through the second 3GPP link; and the device further comprises an associating unit, wherein the associating unit is configured to establish an association relationship between the IP address of the WLAN link of the first device and the second 3GPP link.

45. The device according to claim 44, wherein:
the sending unit is further configured to forward, according to the association relationship and through the second 3GPP link, a data connection request that is sent by the first device to the second user equipment through the WLAN link.

46. The device according to claim 45, comprising:
the receiving unit is further configured to receive the split data that is sent by the second device based on the data connection request sent by the first device, and the sending unit forwards the split data to the first device through the WLAN link; or
the receiving unit is further configured to receive the split data that is sent by the second device based on the data connection request sent by the first device, and the sending unit sends the split data to the first device through the WLAN link according to the association relationship.

47. A data splitting device, comprising a processor, a sending apparatus, and a receiving apparatus:
the processor is configured to generate a data connection request and send the data connection request to the sending apparatus;
the sending apparatus is configured to send the data connection request to a second device, so that the second device executes data splitting; and
the receiving apparatus is configured to receive, through at least two radio links in multiple radio links, split data that is sent by the second device according to the data connection request, wherein
the device establishes, via a third device, one link of the two radio links with the second device, and the at least two radio links in the multiple radio links comprise two radio links that are established by using different radio protocols.

48. The device according to claim 47, wherein:
the processor is further configured to establish a wireless local area network WLAN link with the third device, and establish a first 3rd Generation Partnership Project 3GPP link with the second device, wherein the second device establishes a second 3GPP link with the third device.

49. The device according to claim 47 or 48, wherein:
the receiving apparatus is further configured to acquire, from the third device, an allocated IP address of the WLAN link of the first device and an SSID of a WLAN of the third device.

50. The device according to claim 49, wherein:
the sending apparatus is further configured to send a data link request to the second device through the first 3GPP link.

51. The device according to claim 50, wherein:
the sending apparatus is further configured to send to the second device the IP address of the WLAN link of the first device and the SSID of the WLAN of the third device.

52. The device according to claim 51, wherein:
the processor is further configured to perform tunnel decapsulation for split data that is received by the receiving apparatus and is forwarded by the third device through the second 3GPP link and the WLAN link, and perform sequencing and assembling for the received split data after being performed tunnel decapsulation and split data that is to pass through the first 3GPP link, to obtain final data.

53. The device according to claim 49, wherein:
the sending apparatus is further configured to send a data link request to the second device via the third device through the WLAN link that is established with the third device.

54. The device according to claim 53, wherein:
the sending apparatus is further configured to send to the second device the IP address of the WLAN link of the first device and the SSID of the WLAN of the third device.

55. The device according to claim 54, wherein:
the processor is further configured to perform sequencing and assembling for split data that is received by the receiving apparatus and is forwarded by the third device through the second 3GPP link and the WLAN link, and split data that is to pass through the first 3GPP link, to obtain final data.

56. The device according to any one of claims 47 to 55, wherein:
the sending apparatus is further configured to send signaling to the second device, wherein the signaling is used to indicate that the device supports a data concurrence function.

57. A data splitting device, comprising a processor, a receiving apparatus, and a sending apparatus:
the receiving apparatus is configured to receive a data connection request sent by a first device, and send the data connection request to the processor; and
the processor is configured to instruct, according to the data connection request, the sending apparatus to send split data to the first device through at least two radio links in multiple radio links that are established with the first device, wherein
the at least two radio links in the multiple radio links comprise two radio links that are established by using different radio protocols, and one radio link of the at least two radio links in the multiple radio links is established by the first device with the device via a third device.

58. The device according to claim 57, wherein the at least two radio links in the multiple radio links comprise:
a wireless local area network WLAN link and a 3rd Generation Partnership Project 3GPP link.

59. The device according to claim 57 or 58, wherein:
the processor is further configured to establish a first 3GPP link with the first device, and is further configured to establish a second 3GPP link with the third device, wherein the first device establishes a WLAN link with the third device, and acquires, from the third device, an allocated IP address of the WLAN link of the first device and an SSID of a WLAN of the third device.

60. The device according to claim 59, wherein:
the receiving apparatus is further configured to receive the IP address of the WLAN link of the first device and the SSID of the WLAN of the third device that are sent by the first device through the first 3GPP link, and
the receiving apparatus is further configured to receive the SSID of the WLAN of the third device that is sent by the third device through the second 3GPP link; and
the processor is further configured to determine, according to a correspondence between the SSIDs of the WLAN of the third device that are sent by the first device and the third device, radio links to be used for data splitting.

61. The device according to claim 60, wherein:
the processor is further configured to perform sequence adding and tunnel encapsulation for split data that is to be forwarded by the third device through the second 3GPP link and the WLAN link, so that the sending apparatus delivers the split data by using the IP address of the WLAN link as a destination IP address; and
perform sequence adding for split data that is to pass through the first 3GPP link, so that the sending apparatus delivers the split data.

62. The device according to claim 59, wherein:
the receiving apparatus is further configured to receive the IP address of the WLAN link of the first device and the SSID of the WLAN of the third device that are sent by the first device through the first 3GPP link, and a WLAN port number that is used to establish a service through the WLAN link, and
receive the SSID of the WLAN of the third device that is sent by the third device through the second 3GPP link; and
the processor determines, according to a correspondence between the SSIDs of the WLAN of the third device that are sent by the first device and the third device, radio links to be used for data splitting.

63. The device according to claim 62, wherein:
the processor is further configured to perform sequence adding for split data that is to pass through the first 3GPP link, change a destination IP address to the IP address of the WLAN link, so that the sending apparatus sends the split data to the first device by using the WLAN port number that is used to establish a service through the WLAN link as a port, and
the sending apparatus sends, via the third device through the WLAN link, to the first device split data that is to pass through the second 3GPP link.

64. A data splitting device, comprising a processor, a receiving apparatus, and a sending apparatus:
the receiving apparatus is configured to receive, through a radio link that is established between the device and a second device, split data that is sent by the second device according to a data connection request sent by a first device, and send the split data to the processor; and
the processor is configured to instruct the sending apparatus to send the split data received by the receiving apparatus to the first device through a radio link that is established between the device and the first device, wherein
the radio link that is established between the device and the second device, and the radio link that is established between the device and the first device, are two radio links that are established by using different protocols.

65. The device according to claim 64, wherein:
the processor is further configured to establish a wireless local area network WLAN link with the first device, and is further configured to establish a second 3rd Generation Partnership Project 3GPP link with the second device.

66. The device according to claim 64 or 65, wherein:
the sending apparatus is further configured to send to the first device an allocated IP address of the WLAN link of the first device and an SSID of a WLAN of the device.

67. The device according to claim 66, wherein:
the sending apparatus is further configured to send the SSID of the WLAN of the third device to the second device through the second 3GPP link; or
the sending apparatus is further configured to send the SSID of the WLAN of the third device to the second device through the second 3GPP link; and the processor is further configured to establish an association relationship between the IP address of the WLAN link of the first device and the second 3GPP link.

68. The device according to claim 67, wherein:
the processor is further configured to instruct, according to the association relationship, the sending apparatus to forward, through the second 3GPP link, the data connection request that is sent by the first device to the second user equipment through the WLAN link.

69. The device according to claim 68, comprising:
the receiving apparatus is further configured to receive the split data that is sent by the second device based on the data connection request sent by the first device, and the processor instructs the sending apparatus to forward the split data to the first device through the WLAN link; or
the receiving apparatus is further configured to receive the split data that is sent by the second device based on the data connection request sent by the first device, and the processor sends the split data to the first device through the WLAN link according to the association relationship.
